# EUROPÄISCHE PATENTSCHRIFT

(11) **EP 2 861 841 B1**
(45) Veröffentlichungstag und Bekanntmachung des Hinweises auf die Patenterteilung: **12.10.2016**
(21) Anmeldenummer: 13721309.6
(22) Anmeldetag: 26.04.2013
(51) Int. Cl.: F01N 3/08, F01N 3/10, F01N 3/20, F01N 9/00, F01N 11/00, F02D 41/00, F02M 26/15, F02B 29/04

(54) **VERFAHREN ZUM BETREIBEN EINES DOSIERVENTILS UND ENTSPRECHENDER VERBRENNUNGSMOTOR**
METHOD FOR OPERATING A METERING VALVE AND CORRESPONDING INTERNAL COMBUSTION ENGINE
PROCÉDÉ DE CONTRÔLE D'UNE VANNE DE DOSAGE ET MOTEUR À COMBUSTION INTERNE CORRESPONDANT

(30) Priorität: 16.06.2012 DE 102012011991
(43) Veröffentlichungstag der Anmeldung: 22.04.2015
(73) Patentinhaber: Volkswagen Aktiengesellschaft, 38440 Wolfsburg (DE)
(72) Erfinder: GREINER, Michael, 39116 Magdeburg (DE)
(86) Internationale Anmeldenummer: PCT/EP2013/058700
(87) Internationale Veröffentlichungsnummer: WO 2013/185973

(56) Entgegenhaltungen:
- EP-A1- 1 691 046
- DE-A1-102009 014 361

## Beschreibung

Die vorliegende Erfindung betrifft ein Verfahren zum Betreiben eines Dosierventils zum Einleiten einer Harnstoff-Wasser-Lösung in einen Abgastrakt eines Verbrennungsmotors sowie ein Verfahren zum Betreiben eines Verbrennungsmotors mit einem Ladeluftkühler und einem Dosierventil.

Bei einem Verbrennungsmotor, beispielsweise einem Verbrennungsmotor eines Personenkraftwagens oder Lastkraftwagens, können durch den Verbrennungsmotor am Verbrennungsmotor selbst und an Komponenten des Verbrennungsmotors, beispielsweise im Abgastrakt des Verbrennungsmotors, hohe Temperaturen auftreten, welche Bauteile und Komponenten in diesen temperaturbelasteten Bereichen zerstören oder beschädigen können.

Die DE 10 2009 014 361 A1 betrifft beispielsweise eine Abgasbehandlungseinrichtung für ein Fahrzeug mit einem SCR-Katalysator zum Reduzieren von Stickoxiden im Abgas einer Verbrennungskraftmaschine. Dem SCR-Katalysator ist ein Turbolader vorgeschaltet. Mittels einer Dosiereinrichtung ist ein Reduktionsmittel an einer Einleitstelle in das Abgas einbringbar, welche bevorzugt stromaufwärts einer Turbine des Turboladers angeordnet ist. Die Dosiereinrichtung ist mittels einer Steuerungseinrichtung ansteuerbar, wobei ein Einbringen einer wässrigen Harnstofflösung in den Abgasstrang auch vorgesehen sein kann, wenn besonders hohe Abgastemperaturen anderenfalls zu einer starken thermischen Belastung der Turbine führen würden. In diesem Fall kann das Einbringen der wässrigen Harnstofflösung unabhängig von einem Stickoxidverminderungsbedarf als eine Temperaturschutzmaßnahme vorgesehen sein, bei welcher sich Abgase durch Aufbringen von Verdampfungswärme abkühlen.'

Die EP 1 691 046 B1 betrifft eine Abgasreinigungsvorrichtung für eine Brennkraftmaschine. In einem Abgasrohr des Verbrennungsmotors ist eine Einspritzdüse angebracht, mit welcher ein flüssiges Reduktionsmittel, beispielsweise eine wässrige Harnstofflösung, in das Abgas eingespritzt werden kann. Die Einspritzdüse ist mit einem Flansch verbunden, in welchen über eine Leitung ein Motorkühlmittel geführt wird. In der Leitung ist ein elektromagnetisches Ventil zum Öffnen und Schließen eines Kanals der Leitung vorgesehen, um ein Zirkulieren des Motorkühlmittels zu steuern. Eine Steuereinheit öffnet und schließt das Ventil auf der Grundlage von Erfassungssignalen von einem Kühlmitteltemperatursensor und einem Düsentemperatursensor, welcher eine Düsentemperatur der Einspritzdüse erfasst.

Bei aufgeladenen Motoren, beispielsweise Turbomotoren, werden Ladeluftkühler verwendet, um sicherzustellen, dass durch die Aufladung aufgeheizte Luft heruntergekühlt und dadurch dem Verbrennungsvorgang im Zylinder eine höhere Ladungsdichte zur Verfügung gestellt wird. In Verbindung mit einer Niederdruckabgasrückführung werden Abgase zusammen mit der Ansaugluft in den Verdichter eingeleitet. Die komprimierte Ladeluft wird durch den Ladeluftkühler geleitet und schließlich stark gekühlt der Verbrennung zugeführt. Bei einem Betrieb einer solchen Niederdruckabgasrückführung kann das im Abgas enthaltene Wasser im Ladeluftkühler kondensieren und bei Akkumulation den Ladeluftkühler und die Brennkraftmaschine beschädigen. Die DE 10 2009 006 966 A1 betrifft in diesem Zusammenhang ein Verfahren zum Regeln eines in einem Kühlmittelkreislauf einer Brennkraftmaschine die Ladeluft der Brennkraftmaschine kühlenden Ladeluftkühlers. Dabei wird die Kühlleistung des Ladeluftkühlers mittels einer regelbaren Umwälzpumpe eingestellt. Die DE 10 2008 035 747 A1 betrifft eine Abgasrückführungskühlung mit mehreren Kühlern. Um eine Kühler-Belagbildung, ein so genanntes Fouling (Überkühlen und Kondensation) zu vermeiden, wird die Abgasrückführungsströmung durch und um mehrere Kühler abhängig von Betriebsbedingungen koordiniert.

Die DE 10 2007 038 242 A1 betrifft ein Verfahren zur Rückführung von Abgas, um einer Verbrennungskraftmaschine in allen Betriebspunkten und unter sicherer Vermeidung von Kondensationseffekten einen möglichst großen und gut mit Frischluft vermischten Anteil von Abgas wieder zuzuführen. Dazu erfolgt die Steuerung und Regelung des Anteils an Abgas, welcher der Auslassleitung entnommen und stromaufwärts eines Verdichters der Einlassleitung wieder zugeführt wird, in Abhängigkeit der Temperatur in der Einlassleitung.

Schließlich betrifft die DE 10 2009 006 966 A1 ein Verfahren zum Regeln eines Ladeluftkühlers, bei dem während des Betriebs der Brennkraftmaschine die Kühlleistung des Ladeluftkühlers in Abhängigkeit zweier Schwellenwerte der Ladelufttemperatur des Ladeluftkühlers eingestellt wird. Die Kühlleistung des Ladeluftkühlers kann beispielsweise mittels einer regelbaren Umwälzpumpe eingestellt werden. Hierdurch ist es möglich, die Trägheit des Kühlsystems herabzusetzen.

Bei einem aufgeladenen Verbrennungsmotor, beispielsweise einem Dieselmotor mit Turbolader, kann zur Abgasreinigung eine Harnstoff-Wasser-Lösung (HWL) in den Abgastrakt vor beispielsweise einem SCR-Katalysator (SCR = Selective Catalytic Reduction, selektive katalytische Reduktion) und einem Dieselpartikelfilter (DPF) über ein Dosierventil, ein so genanntes SCR-Dosierventil, eingespritzt werden. In Abhängigkeit von einer Einbauposition des Dosierventils in dem Abgastrakt des Verbrennungsmotors kann das Dosierventil sehr hohen Temperaturen ausgesetzt sein.

Aufgabe der vorliegenden Erfindung ist es daher, das Dosierventil gegen eine Übertemperatur zu schützen.

Gemäß der vorliegenden Erfindung wird diese Aufgabe durch ein Verfahren zum Betreiben eines Dosierventils zum Einleiten einer Harnstoff-Wasser-Lösung in einen Abgastrakt eines Verbrennungsmotors nach Anspruch 1, ein Verfahren zum Betreiben eines Verbrennungsmotors nach Anspruch 10, einen Verbrennungsmotor nach Anspruch 11 und ein Fahrzeug nach Anspruch 14 gelöst. Die abhängigen Ansprüche definieren bevorzugte und vorteilhafte Ausführungsformen der Erfindung.

Gemäß der vorliegenden Erfindung wird ein Verfahren zum Betreiben eines Dosierventils zum Einleiten einer Harnstoff-Wasser-Lösung in einen Abgastrakt eines Verbrennungsmotors bereitgestellt. Bei dem Verfahren wird eine Dosierventiltemperatur des Dosierventils bestimmt und ein Kühlmittel in Abhängigkeit von der Dosierventiltemperatur zu dem Dosierventil zugeführt. Durch das Kühlen des Dosierventils mit dem Kühlmittel kann eine Beschädigung oder Zerstörung des Dosierventils durch eine Übertemperatur verhindert werden.

Der Verbrennungsmotor umfasst ferner einen Ladeluftkühler, welchem das Kühlmittel zum Kühlen von Ladeluft zugeführt wird. Das Kühlmittel wird dem Dosierventil und dem Ladeluftkühler mittels einer gemeinsamen einstellbaren Kühlmittelpumpe direkt zugeführt. Zum Kühlen des Ladeluftkühlers wird üblicherweise ein Niedertemperaturwasserkühlkreislauf verwendet, welcher im Allgemeinen eine niedrigere Temperatur als ein Wasserkühlkreislauf zum Kühlen des Verbrennungsmotors aufweist. Indem das Dosierventil mit dem gleichen Kühlmittel wie der Ladeluftkühler gekühlt wird, kann das Dosierventils auf einer erheblich geringeren Temperatur als die Kühlwassertemperatur des Verbrennungsmotors gehalten werden. Dadurch können ein Verschleiß und eine Beschädigung des Dosierventils zuverlässig verhindert werden. Indem das Dosierventil und der Ladeluftkühler mit dem gemeinsamen Kühlmittel mittels einer gemeinsamen Kühlmittelpumpe versorgt werden, sind keine zusätzlichen Pumpen oder Einstellventile erforderlich, wodurch die Kühlung des Dosierventils kostengünstig realisiert werden kann.

Gemäß einer weiteren Ausführungsform umfasst die Ladeluft, welche von dem Ladeluftkühler gekühlt wird, Abgase, welche über eine einstellbare Abgasrückführungsrate von dem Abgastrakt zu dem Ladeluftkühler geleitet werden. Bei dem Verfahren wird ferner eine Ladelufttemperatur erfasst und die Abgasrückführungsrate in Abhängigkeit von der Ladelufttemperatur und der Dosierventiltemperatur eingestellt. Bei bestimmten Betriebsbedingungen, beispielsweise bei niedrigen Außentemperaturen, kann es vorkommen, dass im Ladeluftkühler Wasser kondensiert und somit eine Schädigung des Ladeluftkühlers oder des Verbrennungsmotors möglich ist. Ein Abschalten oder Herunterregeln der gemeinsamen Kühlmittelpumpe kann zwar verhindern, dass in dem Ladeluftkühler Wasser kondensiert, allerdings besteht dann die Gefahr, dass das Dosierventil überhitzt. Indem der Ladeluftkühler in diesen Betriebszuständen nicht mit Abgas oder mit weniger Abgas von der Abgasrückführung beaufschlagt wird, kann vermieden werden, dass Wasser im Ladeluftkühler kondensiert, da durch die geringer Abgasrückführungsrate weniger wasserhaltiges Abgas in den Ladeluftkühler geführt wird, und gleichzeitig kann die Kühlung des Dosierventils sichergestellt werden. Anders ausgedrückt wird somit sichergestellt, dass das Dosierventil ständig mit Kühlwasser des Niedertemperaturwasserkreislaufs versorgt wird, aber die Abgasrückführung, insbesondere eine Niederdruckabgasrückführung, in besonderen Betriebszuständen so angepasst wird, dass sich im Ladeluftkühler keine unzulässig hohe Wassermasse einlagert.

Gemäß der vorliegenden Erfindung wird weiterhin ein Verfahren zum Betreiben eines Verbrennungsmotors bereitgestellt. Der Verbrennungsmotor umfasst einen Ladeluftkühler zum Kühlen von Ladeluft und ein Dosierventil. Das Dosierventil kann in einem Abgastrakt des Verbrennungsmotors zum Einleiten einer Harnstoff-Wasser-Lösung in den Abgastrakt angeordnet sein. Das Dosierventil kann aber auch ein beliebiges anderes Dosierventil des Verbrennungsmotors sein, welches vor einer Übertemperatur zu schützen ist. Die Ladeluft umfasst Abgase, welche über eine einstellbare Abgasrückführungsrate von einem Abgastrakt des Verbrennungsmotors zu dem Ladeluftkühler geleitet werden. Bei dem Verfahren wird eine Dosierventiltemperatur des Dosierventils bestimmt und eine Ladelufttemperatur der Ladeluft erfasst. Ein Kühlmittel wird zu dem Dosierventil und dem Ladeluftkühler mittels einer gemeinsamen Kühlmittelpumpe in Abhängigkeit von der Dosierventiltemperatur zugeführt. Die Abgasrückführungsrate wird in Abhängigkeit von der Ladelufttemperatur und der Dosierventiltemperatur eingestellt. Somit kann das Dosierventil über den Niedertemperaturwasserkreislauf des Ladeluftkühlers zuverlässig auf einer gewünschten Temperatur gehalten werden und gleichzeitig durch Einstellen, insbesondere Verringern, der Abgasrückführungsrate bei bestimmten Betriebszuständen, welche insbesondere von der Ladelufttemperatur und der Dosierventiltemperatur abhängen, sichergestellt werden, dass nicht zuviel Wasser im Ladeluftkühler kondensiert. Somit ist eine kostengünstige Kühlung des Dosierventils möglich.

Gemäß einer Ausführungsform wird bei dem zuvor beschriebenen Verfahren die Abgasrückführungsrate verringert, wenn die Ladelufttemperatur kleiner als ein umgebungstemperaturabhängiger Wert ist und die Dosierventiltemperatur größer als ein vorgegebener Schwellenwert ist. Wenn die Dosierventiltemperatur größer als der vorgegebene Schwellenwert ist, ist eine Kühlung des Dosierventils erforderlich, um eine Beschädigung des Dosierventils zu vermeiden. Daher kann in diesem Zustand die Kühlmittelpumpe des Niedertemperaturkühlkreislaufs nicht heruntergeregelt werden. Um in diesem Zustand eine Kondensation von Wasser in dem Ladeluftkühler zu vermeiden, kann die Abgasrückführungsrate verringert werden, wenn die Ladelufttemperatur kleiner als der umgebungstemperaturabhängige Wert ist. Der umgebungstemperaturabhängige Wert kann beispielsweise als eine Funktion der Umgebungstemperatur mittels einer Motorelektronik des Verbrennungsmotors bestimmt werden.

Gemäß einer weiteren Ausführungsform wird die Ladelufttemperatur stromabwärts des Ladeluftkühlers erfasst. Dadurch kann sowohl eine mögliche Kondensation von Wasser in dem Ladeluftkühler als auch eine Kondensation von Wasser im Ansaugtrakt des Verbrennungsmotors zwischen dem Ladeluftkühler und dem Verbrennungsmotor bestimmt werden.

Gemäß einer weiteren Ausführungsform wird alternativ oder zusätzlich zu der Erfassung der Ladelufttemperatur bestimmt, ob in dem Ladeluftkühler Wasser aus der Ladeluft kondensiert. Die Abgasrückführungsrate wird in Abhängigkeit davon eingestellt, ob in dem Ladeluftkühler Wasser aus der Ladeluft kondensiert, und in Abhängigkeit von der Dosierventiltemperatur. Die Bestimmung, ob in dem Ladeluftkühler Wasser aus der Ladeluft kondensiert oder nicht, kann beispielsweise modellhaft oder über gemessene Zustandsgrößen der Ladeluft erfolgen oder mittels eines geeigneten Feuchtigkeitssensors.

Gemäß einer weiteren Ausführungsform wird das Kühlmittel zu dem Dosierventil und dem Ladeluftkühler zugeführt, indem eine Förderleistung der Kühlmittelpumpe-eingestellt wird. Dadurch kann die Temperatur des Dosierventils auf einen gewünschten Wert eingestellt werden und gleichzeitig dem Ladeluftkühler eine geeignete Kühlmittelmenge zugeführt werden. Wenn die Gefahr besteht, dass in dem Ladeluftkühler Wasser aus der Ladeluft kondensiert, kann die Förderleistung der Kühlmittelpumpe beispielsweise dahingehend verringert werden, dass das Dosierventil gerade noch ausreichend gekühlt wird. Dadurch kann die Kondensation von Wasser in dem Ladeluftkühler weitestgehend vermieden werden. Wenn trotzdem die Gefahr einer Wasserkondensation besteht, kann, wie zuvor beschrieben, die Abgasrückführungsrate verringert werden. Ist eine größere Kühlleistung vonseiten des Ladeluftkühlers gefordert, kann die Förderleistung der Kühlmittelpumpe entsprechend hoch eingestellt werden. Dadurch wird dem Ladeluftkühler ausreichend Kühlmittel zugeführt und gleichzeitig das Dosierveritil gekühlt.

Gemäß einer weiteren Ausführungsform ist das Dosierventil an einem Ausgang eines Oxidationskatalysators angeordnet, welcher zwischen einem Abgaskrümmer des Verbrennungsmotors und dem Dosierventil angeordnet ist. Die Dosierventiltemperatur wird am Ausgang des Oxidationskatalysators bestimmt. Ein entsprechender Temperatursensor kann ohnehin zur Steuerung der Abgastemperatur und im Zusammenhang mit einem SCR-Katalysator und einem Dieselpartikelfilter erforderlich sein, so dass die Bestimmung der Dosierventiltemperatur mittels dieses Temperatursensors kostengünstig realisiert werden kann.

Das zuvor beschriebene Verfahren ist insbesondere dann vorteilhaft einsetzbar, wenn ein Abstand zwischen dem Abgaskrümmer und dem Oxidationskatalysator verhältnismäßig gering ist, insbesondere wenn dieser Abstand weniger als näherungsweise 600 mm beträgt, da in diesem Fall die Temperaturbelastung des,Dosierventils besonders hoch ist.

Gemäß der vorliegenden Erfindung wird weiterhin ein Verbrennungsmotor bereitgestellt, welcher ein DosierVentil zum Einleiten einer Harnstoff-Wasser-Lösung in einen Abgastrakt des Verbrennungsmotors, einen Temperatursensor zum Erfassen einer Dosierventiltemperatur des Dosierventils, einen Kühlkreislauf mit einer Kühlmittelpumpe und eine Steuervorrichtung umfasst. Der Kühlkreislauf kann insbesondere ein so genannter Niedertemperaturkühlkreislauf sein, welcher beispielsweise zum Kühlen eines Ladeluftkühlers des Verbrennungsmotors vorgesehen ist. Der Kühlkreislauf ist mit dem Dosierventil zum Zuführen von Kühlmittel zu dem Dosierventil gekoppelt. Die Steuervorrichtung ist mit dem Temperatursensor und der Kühlmittelpumpe gekoppelt und in der Lage, die Dosierventiltemperatur des Dosierventils zu bestimmen und dem Dosierventil in Abhängigkeit von der Dosierventiltemperatur das Kühlmittel zuzuführen. Dadurch kann eine Überhitzung des Dosierventils in dem Abgastrakt zuverlässig verhindert werden. Der Verbrennungsmotor umfasst ferner einen Ladeluftkühler, welchem das Kühlmittel zum Kühlen von Ladeluft zugeführt wird. Das Kühlmittel wird dem Dosierventil und dem Ladeluftkühler mittels einer gemeinsamen einstellbaren Kühlmittelpumpe zugeführt.

Bei einer Ausführungsform umfasst der Verbrennungsmotor ein Dosierventil, einen Ladeluftkühler zum Kühlen von Ladeluft, eine Abgasrückführung, einen ersten Temperatursensor zum Erfassen einer Dosierventiltemperatur des Dosierventils, einen zweiten Temperatursensor zum Erfassen einer Ladelufttemperatur der Ladeluft, einen Kühlkreislauf mit einer Kühlmittelpumpe und eine Steuervorrichtung. Die Abgasrückführung ist in der Lage, der Ladeluft Abgase über eine einstellbare Abgasrückführungsrate von einem Abgastrakt des Verbrennungsmotors zuzuführen: Der Kühlkreislauf ist mit dem Dosierventil und dem Ladeluftkühler zum Zuführen von Kühlmittel zu dem Dosierventil und dem Ladeluftkühler gekoppelt. Der Kühlkreislauf ist insbesondere ein so genannter Niedertemperaturkühlkreislauf mit einer Kühlmitteltemperatur, welche niedriger als die Kühlmitteltemperatur des Verbrennungsmotors ist, welches zum Kühlen der Zylinder des Verbrennungsmotors verwendet wird. Die Steuervorrichtung ist mit dem ersten Temperatursensor, dem zweiten Temperatursensor, der Kühlmittelpumpe und einem Einstellmittel zum Einstellen der Abgasrückführungsrate gekoppelt. Das Einstellmittel zum Einstellen der Abgasrückführungsrate kann beispielsweise ein Einstellventil in der Abgasrückführung umfassen. Die Steuervorrichtung ist ausgestaltet, die Dosierventiltemperatur des Dosierventils zu bestimmen, die Ladelufttemperatur zu bestimmen und in Abhängigkeit von der Dosierventiltemperatur dem Dosierventil und dem Ladeluftkühler das Kühlmittel zuzuführen. Ferner ist die Steuervorrichtung ausgestaltet, die Abgasrückführungsrate in Abhängigkeit von der Ladelufttemperatur und der Dosierventiltemperatur einzustellen.

Die zuvor beschriebenen Verbrennungsmotoren sind somit zur Durchführung des zuvor beschriebenen Verfahrens ausgestaltet und umfassen daher auch die Vorteile der zuvor beschriebenen Verfahren.

Schließlich wird gemäß der vorliegenden Erfindung ein Fahrzeug mit einem der zuvor beschriebenen Verbrennungsmotoren bereitgestellt.

Die vorliegenden Erfindung wird nachfolgend unter Bezugnahme auf die Zeichnungen im Detail erläutert werden.
Fig. 1 zeigt schematisch einen Verbrennungsmotor gemäß einer Ausführungsform der vorliegenden Erfindung.
Fig. 2 zeigt die Arbeitsweise eines erfindungsgemäßen Verfahrens zum Betreiben eines Verbrennungsmotors.
Fig. 3 zeigt ein Fahrzeug gemäß einer Ausführungsform der vorliegenden Erfindung.

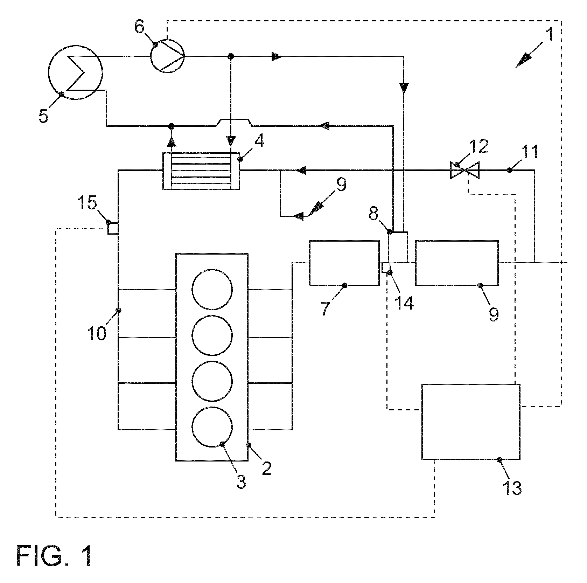

Fig. 1 zeigt einen Verbrennungsmotor 1, welcher einen Motorblock 2 mit vier Zylindern 3, einen Ladeluftkühler 4, einen Niedertemperaturwasserkühler 5, eine regelbare Wasserpumpe 6, einen Oxidationskatalysator 7, ein SCR-Dosierventil 8 und einen SCR-Katalysator mit Dieselpartikelfilter 9 umfasst. Weitere Komponenten des Verbrennungsmotors 1, wie zum Beispiel einen Abgasturbolader, einen Verdichter und ein Kühlsystem für die Zylinder 3 sind aus Gründen der Übersichtlichkeit in der Fig. 1 weggelassen. Einer Ansaugseite 10 des Verbrennungsmotors 1 wird Ansaugluft 9 über den Ladeluftkühler 4 zugeführt. Der Ansaugluft 9 kann über eine Abgasrückführung 11 Abgas zugeführt werden. Die Abgasrückführung 11 ist beispielsweise eine Niederdruckabgasrückführung, welche Abgase hinter dem SCR-Katalysator und/oder Dieselpartikelfilter 9 entnimmt und der Ansaugluft 9 zuführt. Die Abgasrückführung 11 umfasst ein Abgasrückführventil 12 zum Einstellen einer Abgasrückführungsrate über die Abgasrückführung 11. Die regelbare Wasserpumpe 6 regelt einen Wasserfluss in einem Niedertemperaturwasserkühlkreislauf von dem Niedertemperaturwasserkühler 5 zu dem Ladeluftkühler 4 und dem Dosierventil 8. Abgase aus den Zylindern 3 werden durch den Oxidationskatalysator 7 in den SCR-Katalysator und Dieselpartikelfilter 9 geleitet. Für die Abgasbehandlung in dem SCR-Katalysator wird dem Abgas über das Dosierventil 8 eine wässrige Harnstofflösung, eine so genannte Harnstoff-Wasser-Lösung (HWL), zugeführt.

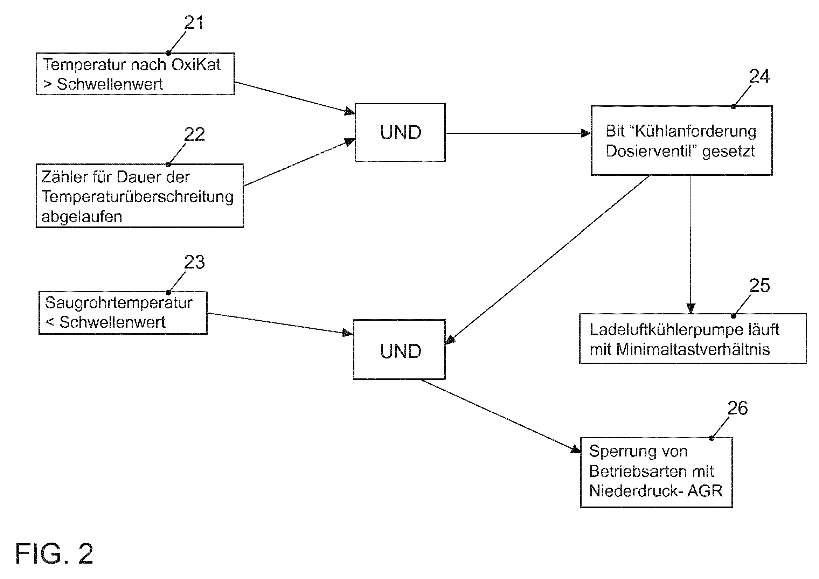

Wie aus der Fig. 1 ersichtlich ist, befinden sich das Dosierventil 8 und der Ladeluftkühler 4 im selben Niedertemperaturkühlmittelkreislauf und werden daher stets gleichzeitig gekühlt. Es gibt jedoch Betriebszustände des Verbrennungsmotors 1, in welchen das Dosierventil 8 gekühlt werden muss, der Ladeluftkühler 4 jedoch nicht, um eine Kondensation und Wassereinlagerung im Ladeluftkühler durch Abkühlung des niederdruckseitig rückgeführten Abgases unter den Taupunkt zu vermeiden. Um dies zu erreichen, wird neben der Förderleistung der Wasserpumpe 6 auch die Abgasrückführungsrate über die Abgasrückführung 11 mittels des Abgasrückführungsventils 12 eingestellt, wie es nachfolgend unter Bezugnahme auf Fig. 2 erläutert werden wird. Dazu erfasst eine Steuereinheit 13 eine Temperatur hinter dem Oxidationskatalysator 7 mittels eines ersten Temperatursensors 14 und eine Ladelufttemperatur in dem Ansaugrohr 10 mittels eines zweiten Temperatursensors 15. Wenn die Temperatur hinter dem Oxidationskatalysator einen Schwellenwert überschreitet, d.h. wenn die Dosierventiltemperatur über einem vorbestimmten Schwellenwert liegt (Block 21 in Fig. 2) und diese Temperaturüberschreitung für eine bestimmte Dauer anhält (Block 22), wird ein Bit für eine Kühlanforderung des Dosierventils gesetzt (Block 24). Wenn das Bit für die Kühlanforderung des Dosierventils gesetzt ist (Block 24), läuft die Wasserpumpe 6 mit zumindest minimalem Tastverhältnis (Block 25). Wenn das Bit für die Kühlanforderung für das Dosierventil gesetzt ist (Block 24) und die Temperatur im Saugrohr 10 unterhalb eines vorgegebenen Schwellenwerts liegt (Block 23), wird die Niederdruckabgasrückführung gesperrt oder zumindest verringert (Block 26). Damit wird einerseits immer eine Kühlung des Dosierventils 8 sichergestellt und andererseits wird eine Wasseransammlung im Ladeluftkühler 4 verhindert. Eine Abschaltung des Niedertemperaturwasserkreislaufs ist nicht erforderlich. Zusätzlich kann sich ein Emissionsvorteil ergeben, weil die Niederdruckabgasrückführung nur dann (aus Bauteilschutzgründen) abgeschaltet wird, wenn Kondensationsbedingungen im Ladeluftkühler vorliegen.

Liegt eine Kühlanforderung des Ladeluftkühlers vor, wird die Wasserpumpe dementsprechend eingestellt.

Sinkt die Temperatur hinter dem Oxidationskatalysator für eine vorbestimmte Zeit unter einen weiteren vorbestimmten Schwellenwert, so dass keine Kühlung des Dosierventils erforderlich ist, wird das Bit für die Kühlanforderung des Dosierventils gelöscht. In diesem Fall ist eine Sperrung oder Verringerung der Niederdruckabgasrückführung (Block 26) nicht erforderlich, sondern im Falle einer möglichen Wasserkondensation im Ladeluftkühler kann die Förderleistung der Wasserpumpe 6 entsprechend verringert werden. Wenn die Saugrohrtemperatur für eine vorbestimmte Zeit über einen weiteren vorbestimmten Schwellenwert steigt, wird ebenfalls die Sperrung oder Verringerung der Niederdruckabgasführung (Block 26) aufgehoben.

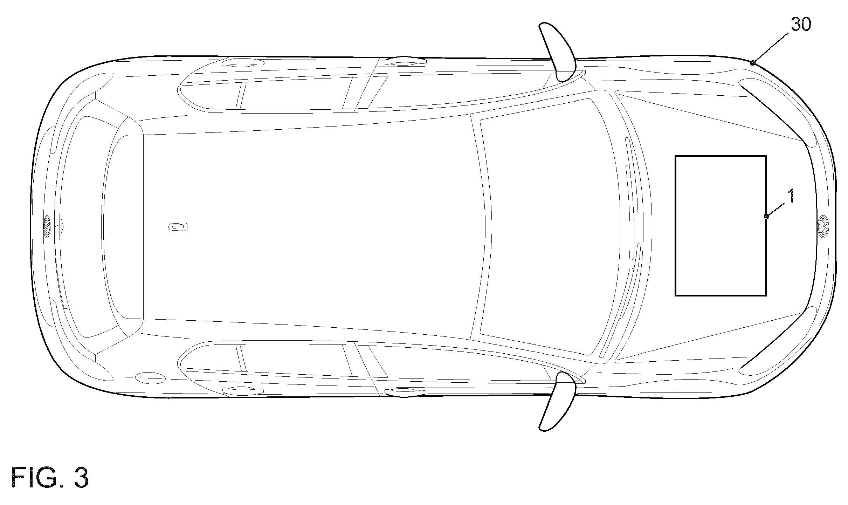

Fig. 3 zeigt ein Fahrzeug 30 mit dem Verbrennungsmotor 1. Insbesondere bei einer kompakten Bauweise des Verbrennungsmotors 1 kann ein Abstand zwischen einem Abgaskrümmer des Verbrennungsmotors 1 und dem Oxidationskatalysator 7 verhältnismäßig gering sein. In diesem Fall herrschen am Ausgang des Oxidationskatalysators 7 verhältnismäßig hohe Temperaturen, so dass das Dosierventil 8 vor diesen hohen Temperaturen geschützt werden muss, um eine temperaturbedingte Beschädigung des Dosierventils 8 zu vermeiden. Dies kann insbesondere bei kompakten Verbrennungsmotoren auftreten, bei denen dieser Abstand beispielsweise im Bereich von 40 bis 60 cm liegt.

## Patentansprüche

1. Verfahren zum Betreiben eines Dosierventils zum Einleiten einer Harnstoff-Wasser-Lösung in einen Abgastrakt eines Verbrennungsmotors, wobei das Verfahren umfasst:
- Bestimmen einer Dosierventiltemperatur des Dosierventils (8), und
- Zuführen eines Kühlmittels zu dem Dosierventil (8) in Abhängigkeit von der Dosierventiltemperatur,
**dadurch gekennzeichnet,**
**dass** der Verbrennungsmotor (1) ferner einen Ladeluftkühler (4) umfasst, welchem das Kühlmittel zum Kühlen von Ladeluft (9) zugeführt wird, wobei das Kühlmittel dem Dosierventil (8) und dem Ladeluftkühler (4) mittels einer gemeinsamen einstellbaren Kühlmittelpumpe (6) zugeführt wird.

2. Verfahren nach Anspruch 1, wobei die Ladeluft (9) Abgase umfasst, welche über eine einstellbare Abgasrückführungsrate von dem Abgastrakt zu dem Ladeluftkühler (4) geleitet werden, wobei das Verfahren ferner umfasst:
- Erfassen einer Ladelufttemperatur, und
- Einstellen der Abgasrückführungsrate in Abhängigkeit von der Ladelufttemperatur und der Dosierventiltemperatur.

3. Verfahren nach Anspruch 1 oder 2, wobei das Dosierventil (8) in dem Abgastrakt des Verbrennungsmotors (1) zum Einleiten einer Harnstoff-Wasser-Lösung in den Abgastrakt angeordnet ist.

4. Verfahren nach einem der Ansprüche 2 oder 3, wobei die Abgasrückführungsrate verringert wird, wenn die Ladelufttemperatur kleiner als ein umgebungstemperaturabhängiger Wert ist und die Dosierventiltemperatur größer als ein vorgegebener Schwellenwert ist.

5. Verfahren nach einem der Ansprüche 2-4, wobei das Erfassen der Ladelufttemperatur ein Erfassen einer Ladelufttemperatur stromabwärts des Ladeluftkühlers (4) umfasst.

6. Verfahren nach Anspruch 1, wobei die Ladeluft (9) Abgase umfasst, welche über eine einstellbare Abgasrückführungsrate von dem Abgastrakt zu dem Ladeluftkühler (4) geleitet werden, wobei das Verfahren ferner umfasst:
- Bestimmen, ob in dem Ladeluftkühler (4) Wasser aus der Ladeluft (9) kondensiert, und
- Einstellen der Abgasrückführungsrate in Abhängigkeit davon, ob in dem Ladeluftkühler (4) Wasser aus der Ladeluft (9) kondensiert, und in Abhängigkeit von der Dosierventiltemperatur.

7. Verfahren nach einem der vorhergehenden Ansprüche, wobei das Zuführen des Kühlmittels zu dem Dosierventil (8) und dem Ladeluftkühler (4) ein Einstellen einer Förderleistung der Kühlmittelpumpe (6) umfasst.

8. Verfahren nach einem der vorhergehenden Ansprüche, wobei das Dosierventil (8) an einem Ausgang eines Oxidations-Katalysators (7), welcher zwischen einem Abgaskrümmer des Verbrennungsmotors (1) und dem Dosierventil (8) angeordnet ist, angeordnet ist, und wobei das Bestimmen der Dosierventiltemperatur ein Bestimmen einer Temperatur an dem Ausgang des Oxidations-Katalysators (7) umfasst.

9. Verfahren nach Anspruch 8, wobei ein Abstand zwischen dem Abgaskrümmer und dem Oxidations-Katalysators (7) weniger als 600 mm beträgt.

10. Verfahren zum Betreiben eines Verbrennungsmotors, wobei der Verbrennungsmotor (1) einen Ladeluftkühler (4) zum Kühlen von Ladeluft (9) und ein Dosierventil (8) umfasst, wobei die Ladeluft (9) Abgase umfasst, welche über eine einstellbare Abgasrückführungsrate von einem Abgastrakt des Verbrennungsmotors (1) zu dem Ladeluftkühler (4) geleitet werden, **dadurch gekennzeichnet, dass** das Verfahren das Verfahren nach einem der vorhergehenden Ansprüche umfasst.

11. Verbrennungsmotor, umfassend:
- ein Dosierventil (8) zum Einleiten einer Harnstoff-Wasser-Lösung in einen Abgastrakt des Verbrennungsmotors (1),
- einen Temperatursensor (14) zum Erfassen einer Dosierventiltemperatur des Dosierventils (8),
- einen Kühlkreislauf mit einer Kühlmittelpumpe (6), wobei der Kühlkreislauf mit dem Dosierventil (8) zum Zuführen von Kühlmittel zu dem Dosierventil gekoppelt ist, und
- eine Steuervorrichtung (13), welche mit dem Temperatursensor (14) und der Kühlmittelpumpe (6) gekoppelt ist und ausgestaltet ist, die Dosierventiltemperatur des Dosierventils (8) zu bestimmen und Kühlmittel zu dem Dosierventil (8) in Abhängigkeit von der Dosierventiltemperatur zuzuführen,
**dadurch gekennzeichnet,**
**dass** der Verbrennungsmotor (1) ferner einen Ladeluftkühler (4) umfasst, welchem das Kühlmittel zum Kühlen von Ladeluft (9) zugeführt wird, wobei das Kühlmittel dem Dosierventil (8) und dem Ladeluftkühler (4) mittels der gemeinsamen einstellbaren Kühlmittelpumpe (6) zugeführt wird.

12. Verbrennungsmotor nach Anspruch 11, umfassend:
- eine Abgasrückführung (11), welche der Ladeluft (9) Abgase über eine einstellbare Abgasrückführungsrate von einem Abgastrakt des Verbrennungsmotors (1) zuführt,
- einen weiteren Temperatursensor (15) zum Erfassen einer Ladelufttemperatur der Ladeluft (9),
- und wobei die Steuervorrichtung (13) ferner mit dem weiteren Temperatursensor (15) und einem Einstellmittel (12) zum Einstellen der Abgasrückführungsrate gekoppelt ist und ausgestaltet ist, die Dosierventiltemperatur des Dosierventils (8) zu bestimmen, die Ladelufttemperatur zu bestimmen, Kühlmittel zu dem Dosierventil (8) und dem Ladeluftkühler (4) in Abhängigkeit von der Dosierventiltemperatur zuzuführen und die Abgasrückführungsrate in Abhängigkeit von der Ladelufttemperatur und der Dosierventiltemperatur einzustellen.

13. Verbrennungsmotor nach Anspruch 11 oder 12, wobei der Verbrennungsmotor (1) zur Durchführung des Verfahrens nach einem der Ansprüche 1-10 ausgestaltet ist.

14. Fahrzeug umfassend einen Verbrennungsmotor (1) nach einem der Ansprüche 11-13.

## Claims

1. Method for operating a metering valve for introducing a urea/water solution into an exhaust gas section of an internal combustion engine, the method comprising:
- determining of a metering valve temperature of the metering valve (8), and
- feeding of a coolant to the metering valve (8) in a manner which is dependent on the metering valve temperature,
**characterized**
**in that**, furthermore, the internal combustion engine (1) comprises an intercooler (4) which is fed the coolant for cooling charge air (9), the coolant being fed to the metering valve (8) and the intercooler (4) by means of a common adjustable coolant pump (6).

2. Method according to Claim 1, the charge air (9) comprising exhaust gases which are conducted from the exhaust gas section to the intercooler (4) via an adjustable exhaust gas recirculation rate, the method comprising, furthermore:
- detecting of a charge air temperature, and
- setting of the exhaust gas recirculation rate in a manner which is dependent on the charge air temperature and the metering valve temperature.

3. Method according to Claim 1 or 2, the metering valve (8) being arranged in the exhaust gas section of the internal combustion engine (1) for introducing a urea/water solution into the exhaust gas section.

4. Method according to either of Claims 2 and 3, the exhaust gas recirculation rate being reduced if the charge air temperature is lower than a value which is dependent on the ambient temperature and the metering valve temperature is higher than a predefined threshold value.

5. Method according to one of Claims 2-4, detecting of the charge air temperature comprising detecting of a charge air temperature downstream of the intercooler (4).

6. Method according to Claim 1, the charge air (9) comprising exhaust gases which are conducted from the exhaust gas section to the intercooler (4) via an adjustable exhaust gas recirculation rate, the method comprising, furthermore:
- determining whether water condenses out of the charge air (9) in the intercooler (4), and
- setting of the exhaust gas recirculation rate in a manner which is dependent on whether water condenses out of the charge air (9) in the intercooler (4), and in a manner which is dependent on the metering valve temperature.

7. Method according to one of the preceding claims, feeding of the coolant to the metering valve (8) and the intercooler (4) comprising setting of a delivery capacity of the coolant pump (6).

8. Method according to one of the preceding claims, the metering valve (8) being arranged at an outlet of an oxidation catalytic converter (7) which is arranged between an exhaust gas manifold of the internal combustion engine (1) and the metering valve (8), and determining of the metering valve temperature comprising determining of a temperature at the outlet of the oxidation catalytic converter (7).

9. Method according to Claim 8, a spacing between the exhaust gas manifold and the oxidation catalytic converter (7) being less than 600 mm.

10. Method for operating an internal combustion engine, the internal combustion engine (1) comprising an intercooler (4) for cooling charge air (9) and a metering valve (8), the charge air (9) comprising exhaust gases which are conducted from an exhaust gas section of the internal combustion engine (1) to the intercooler (4) via an adjustable exhaust gas recirculation rate, **characterized in that** the method comprises the method according to one of the preceding claims.

11. Internal combustion engine, comprising:
- a metering valve (8) for introducing a urea/water solution into an exhaust gas section of the internal combustion engine (1),
- a temperature sensor (14) for detecting a metering valve temperature of the metering valve (8),
- a cooling circuit with a coolant pump (6), the cooling circuit being coupled to the metering valve (8) for feeding coolant to the metering valve, and
- a control apparatus (13) which is coupled to the temperature sensor (14) and the coolant pump (6) and is configured to determine the metering valve temperature of the metering valve (8) and to feed coolant to the metering valve (8) in a manner which is dependent on the metering valve temperature,
**characterized**
**in that**, furthermore, the internal combustion engine (1) comprises an intercooler (4) which is fed the coolant for cooling charge air (9), the coolant being fed to the metering valve (8) and the intercooler (4) by means of the common adjustable coolant pump (6).

12. Internal combustion engine according to Claim 11, comprising:
- an exhaust gas recirculation means (11) which feeds exhaust gases to the charge air (9) via an adjustable exhaust gas recirculation rate from an exhaust gas section of the internal combustion engine (1),
- a further temperature sensor (15) for detecting a charge air temperature of the charge air (9),
- and, furthermore, the control apparatus (13) being coupled to the further temperature sensor (15) and a setting means (12) for setting the exhaust gas recirculation rate and being configured to determine the metering valve temperature of the metering valve (8), to determine the charge air temperature, to feed coolant to the metering valve (8) and the intercooler (4) in a manner which is dependent on the metering valve temperature, and to set the exhaust gas recirculation rate in a manner which is dependent on the charge air temperature and the metering valve temperature.

13. Internal combustion engine according to Claim 11 or 12, the internal combustion engine (1) being configured for carrying out the method according to one of Claims 1-10.

14. Vehicle comprising an internal combustion engine (1) according to one of Claims 11-13.

## Revendications

1. Procédé de contrôle d'une vanne de dosage en vue d'introduire une solution urée-eau dans une ligne des gaz d'échappement d'un moteur à combustion interne, dans lequel le procédé comprend les étapes suivantes:
- déterminer une température de vanne de dosage de la vanne de dosage (8), et
- ajouter un agent réfrigérant à la vanne de dosage (8) en fonction de la température de vanne de dosage,
**caractérisé en ce que** le moteur à combustion interne (1) comprend en outre un refroidisseur d'air de suralimentation (4), auquel l'agent réfrigérant pour le refroidissement de l'air de suralimentation (9) est ajouté, dans lequel on ajoute l'agent réfrigérant à la vanne de dosage (8) et au refroidisseur d'air de suralimentation (4) au moyen d'une pompe d'agent réfrigérant réglable commune (6).

2. Procédé selon la revendication 1, dans lequel l'air de suralimentation (9) contient des gaz d'échappement, qui sont conduits au moyen d'un taux de recyclage de gaz d'échappement réglable de la ligne des gaz d'échappement au refroidisseur d'air de suralimentation (4), dans lequel le procédé comprend en outre les étapes suivantes:
- détecter une température de l'air de suralimentation, et
- régler le taux de recyclage de gaz d'échappement en fonction de la température de l'air de suralimentation et de la température de la vanne de dosage.

3. Procédé selon la revendication 1 ou 2, dans lequel la vanne de dosage (8) est disposée dans la ligne des gaz d'échappement du moteur à combustion interne (1) en vue d'introduire une solution urée-eau dans la ligne des gaz d'échappement.

4. Procédé selon une des revendications 2 ou 3, dans lequel on diminue le taux de recyclage de gaz d'échappement, lorsque la température de l'air de suralimentation est inférieure à une valeur dépendant de la température ambiante et que la température de la vanne de dosage est supérieure à une valeur de seuil prédéterminée.

5. Procédé selon l'une quelconque des revendications 2 à 4, dans lequel la détection de la température de l'air de suralimentation comprend une détection d'une température de l'air de suralimentation en aval du refroidisseur d'air de suralimentation (4).

6. Procédé selon la revendication 1, dans lequel l'air de suralimentation (9) comprend des gaz d'échappement, qui sont conduits au moyen d'un taux de recyclage de gaz d'échappement réglable de la ligne des gaz d'échappement au refroidisseur d'air de suralimentation (4), dans lequel le procédé comprend en outre les étapes suivantes:
- déterminer si de l'eau provenant de l'air de suralimentation (9) se condense dans le refroidisseur d'air de suralimentation (4), et
- régler le taux de recyclage de gaz d'échappement en fonction du fait que de l'eau provenant de l'air de suralimentation (9) se condense dans le refroidisseur d'air de suralimentation (4), et en fonction de la température de la vanne de dosage.

7. Procédé selon l'une quelconque des revendications précédentes, dans lequel l'ajout de l'agent réfrigérant à la vanne de dosage (8) et au refroidisseur d'air de suralimentation (4) comprend un réglage d'une capacité de refoulement de la pompe d'agent réfrigérant (6).

8. Procédé selon l'une quelconque des revendications précédentes, dans lequel la vanne de dosage (8) est disposée à une sortie d'un catalyseur d'oxydation (7), qui est disposé entre un collecteur d'échappement du moteur à combustion interne (1) et la vanne de dosage (8), et dans lequel la détermination de la température de la vanne de dosage comprend une détermination d'une température à la sortie du catalyseur d'oxydation (7).

9. Procédé selon la revendication 8, dans lequel une distance entre le collecteur d'échappement et le catalyseur d'oxydation (7) est inférieure à 600 mm.

10. Procédé de contrôle d'un moteur à combustion interne, dans lequel le moteur à combustion interne (1) comprend un refroidisseur d'air de suralimentation (4) pour le refroidissement d'air de suralimentation (9) et une vanne de dosage (8), dans lequel l'air de suralimentation (9) comprend des gaz d'échappement, qui sont conduits au moyen d'un taux de recyclage de gaz d'échappement réglable d'une ligne des gaz d'échappement du moteur à combustion interne (1) au refroidisseur d'air de suralimentation (4), **caractérisé en ce que** le procédé comprend le procédé selon l'une quelconque des revendications précédentes.

11. Moteur à combustion interne, comprenant:
- une soupape de dosage (8) destinée à introduire une solution urée-eau dans une ligne des gaz d'échappement du moteur à combustion interne (1),
- un capteur de température (14) destiné à détecter une température de vanne de dosage de la vanne de dosage (8),
- un circuit de refroidissement avec une pompe d'agent réfrigérant (6), dans lequel le circuit de refroidissement est couplé avec la vanne de dosage (8) pour ajouter de l'agent réfrigérant à la vanne de dosage, et
- un dispositif de commande (13), qui est couplé avec le capteur de température (14) et la pompe d'agent réfrigérant (6) et qui est configuré pour déterminer la température de vanne de dosage de la vanne de dosage (8) et ajouter de l'agent réfrigérant à la vanne de dosage (8) en fonction de la température de la vanne de dosage,
**caractérisé en ce que** le moteur à combustion interne (1) comprend en outre un refroidisseur d'air de suralimentation (4), auquel l'agent réfrigérant destiné à refroidir l'air de suralimentation (9) est ajouté, dans lequel l'agent réfrigérant est ajouté à la vanne de dosage (8) et au refroidisseur d'air de suralimentation (4) au moyen d'une pompe d'agent réfrigérant réglable commune (6).

12. Moteur à combustion interne selon la revendication 11, comprenant:
- une conduite de retour de gaz d'échappement (11), qui ajoute des gaz d'échappement à l'air de suralimentation (9) au moyen d'un taux de recyclage de gaz d'échappement réglable à partir d'une ligne des gaz d'échappement du moteur à combustion interne (1),
- un autre capteur de température (15) destiné à détecter une température d'air de suralimentation de l'air de suralimentation (9),
- et dans lequel le dispositif de commande (13) est en outre couplé avec l'autre capteur de température (15) et un moyen de réglage (12) destiné à régler le taux de recyclage de gaz d'échappement et est configuré pour déterminer la température de vanne de dosage de la vanne de dosage (8), pour déterminer la température de l'air de suralimentation, pour ajouter de l'agent réfrigérant à la vanne de dosage (8) et au refroidisseur d'air de suralimentation (4) en fonction de la température de la vanne de dosage et pour régler le taux de recyclage de gaz d'échappement en fonction de la température de l'air de suralimentation et de la température de la vanne de dosage.

13. Moteur à combustion interne selon la revendication 11 ou 12, dans lequel le moteur à combustion interne (1) est configuré en vue de la mise en oeuvre du procédé selon l'une quelconque des revendications 1 à 10.

14. Véhicule, comprenant un moteur à combustion interne (1) selon l'une des revendications 11 à 13.
